# EUROPEAN PATENT SPECIFICATION

(11) **EP 4 028 324 B1**
(45) Date of publication and mention of the grant of the patent: **28.01.2026**
(21) Application number: 20764705.8
(22) Date of filing: 19.08.2020
(51) Int. Cl.: B64C 39/00, B64D 3/02, F41J 2/00, F41J 9/10

(54) **DECOY SYSTEM**
KÖDERSYSTEM
SYSTÈME DE LEURRE

(30) Priority: 10.09.2019 GB 201913022
(43) Date of publication of application: 20.07.2022
(73) Proprietor: The Secretary of State for Defence, Salisbury, Wiltshire SP4 0JQ (GB)
(72) Inventor: CLELLAND, Neil, Campbell, MacLeold, Salisbury, Wiltshire SP4 0JQ (GB); DUDLEY, Robert, Salisbury, Wiltshire SP4 0JQ (GB)
(86) International application number: PCT/GB2020/000070
(87) International publication number: WO 2021/048516

(56) References cited:
- EP-A1- 3 994 420
- WO-A2-2005/036941
- JP-A- 2002 096 795
- RU-C1- 2 660 518
- US-A1- 2019 252 791
- US-B1- 6 507 307

## Description

### Technical Field of the Invention

The invention is concerned with an airborne decoy system, specifically an airborne passive decoy system for use in the radio waveband, and has application to maritime, air and/or land defence and security. The invention comprises a controllable aerial propulsion unit and one or more retroreflectors mounted on, contained within or otherwise borne by the controllable propulsion unit, the system being configured to deploy the one or more retroreflectors, preferably one or more corner reflectors, as a decoy at a desired location and/or time. In related aspects, the invention is concerned with a decoy round, a launch system and associated methods and uses.

### Background to the Invention

Airborne corner reflectors (ACRs) reflect radio waves from active radar or radar seekers and their use is well known as passive radar decoys in the military field. In a typical arrangement, single or multiple ACRs may be launched in a decoy round from a maritime vessel, and the ACR is subsequently ejected and deployed on a parachute.

Various attempts have been made to improve ACR systems, including the use of lightweight, expandable corner reflectors. For example, US 9,147,940 to Yahagi et al discloses a lightweight decoy system in which both a corner reflector and a parachute unfold upon deployment from a flying object, and in which deployment is improved by directly attaching the parachute canopy to the corner reflector and positioning the inflation cylinder to stabilize falling posture.

RU 2660518 C1 describes an alternative arrangement which attempts to solve problems associated with launched decoys and provide all-azimuth radio-optical shielding of surface ship in motion. The arrangement comprises one or more multi-rotor aircraft connected to a surface ship in motion by means of a cable and radio-optic interference units which are lowered from the aircraft.

US2019252791 A1 describes a method and system for reflecting a radar signal whereby an event for a platform is detected and next a number of decoy units are launched from a launcher system. The decoy unit comprises an inflatable radar decoy and an inflator cartridge configured to inflate the radar decoy.

US6507307 B1 describes a passive radar decoy comprising a substantially hemispherical upper body portion having an inner surface coated with an RF reflective material, a weighted nose piece, a tapered lower body portion interconnecting the upper body to the nose piece, an RF reflectively-coated corner reflector mounted coaxially within the hemispherically-shaped upper body portion; and means to ram-air inflate the decoy when it is released from the aircraft such that RF energy from a ground source of such energy impinges on the RF reflective surfaces to retro-reflectively return said RF energy back to the source of said energy and provide a scintillating and doppler frequency return and enhanced radar target cross section.

JP2002096795A discloses a reflector buoy for radar having a simple structure so that it can be stably laid over the surface of the sea even if thrown from an aircraft or the like. The reflector buoy includes a cylindrical container closed at its lower end and having at its top a tapered opening, a foldable and deployable reflector deployment means retractable into the container and having a plurality of a flexible, wave-reflecting films forming a reflector, and a float made of flexible material with good wave permeability for closing the periphery of the reflector deployment means.

WO2005/036941 A2 describes a radar decoy having radar reflectors disposed in the interior of an inflated canopy of a descending parachute as a first set of four corner reflectors, and a second set of corner reflectors disposed on the exterior of the canopy integral with the first set of corner reflectors, to form an octahedron of eight corner reflectors.

EP 3994420 A1, which is citable under Article 54(3) EPC, discloses a decoy target comprising at least two corner reflectors which reflect radar radiation, the corner reflectors being arranged in a reflector matrix in a staggered manner in terms of height, width and/or depth, corresponding to a target to be simulated.

It is an object of the invention to provide an improved passive decoy system based on airborne corner reflectors.

### Summary of the Invention

According to a first aspect, the invention provides an airborne passive decoy system for use in the radio waveband in accordance with appended claim 1.

The system of the invention is an integral system. By integral is meant that it is a physically self-contained system which does not (for example) rely on tethers, cables or suchlike ancillary features for power, support and/or or positioning. However, the system may be controlled or guided by wireless means such as radio frequency communication.

As is well understood, a retroreflector is a device or surface which reflects radiation back to its source with a minimum of scattering. In the invention, the one or more retroreflectors are preferably one or more corner reflectors. Preferably, each corner reflector comprises multiple reflective faces, for example in excess of 8 reflective faces.

Prior art airborne corner reflector passive decoy systems are typically launched from a ship - in a canister or the like - as a decoy round, and then ejected from the canister at a predetermined time from launch and allowed to descend into the path of the incoming threat using a parachute. Although a system of this type tends to be relatively low cost and straightforward to use, it also suffers from important disadvantages. Firstly, a launch trajectory needs to be determined prior to launch based on information from a tracking and combat management system, and the aerial location at which the corner reflector decoy is deployed depends on a pre-determined release time. However, this represents a 'best estimate' only, and may be affected by changes to the threat behaviour and/or environmental factors. Secondly, the decoy system relies on the use of a parachute to control the descent of the decoy through the guiding beam of the threat. Although parachutes are simple, low cost and commonplace in the art, a decoy which descends under gravity has a finite lifetime/duration and is inevitably one-shot. Moreover, a parachute is susceptible to the effects of environmental factors such as wind speed, meaning that the decoy may drift from the required location.

Prior art cable-linked systems comprising multi-rotor aircraft may overcome certain problems of launched systems, such as the effects of wind, sea waves and precipitation, but are relatively complex and potentially vulnerable in the event of problems with the cable. Moreover, a system of this type is linked permanently to the surface ship in use, and may be difficult to control should the ship undergo a fast-paced manoeuvre.

In the invention, an airborne passive decoy system is provided which comprises a controllable aerial propulsion unit and one or more retroreflectors. The retroreflector(s) are mounted on, contained within or otherwise borne by the controllable propulsion unit, and the system is configured to deploy the one or more retroreflectors at a desired location and/or time, or locations and/or times. The inventors have realised that the use of a controllable aerial propulsion unit in this way may obviate the need for a separate decoy launch mechanism (e.g. a decoy round and tube launcher), or the need for a parachute to control retroreflector descent, or both. Additionally, the controllable aerial propulsion unit may be used to correct or finely tune the location/position of retroreflector deployment after launch (for example, based on updated or revised tracking information or environmental conditions), and/or to relocate the passive retroreflector(s) in response to a change in threat conditions. The system of the invention is more accurate and more versatile than prior art systems, and may be re-used to provide a cost effective alternative to ship launched decoy rounds. Reuse typically follows release of the one or more retroreflectors, which may be after the one or more retroreflectors have been severably deployed, or may be after a step of detaching or dispensing with the corner reflector after use (e.g. after tethered use). By dispensing with the one or more retroreflectors or severably deploying the one or more corner reflectors, the propulsion unit has more fuel/energy available to it to effect a return to the host platform (e.g. a surface ship), where it can be re-fuelled, refitted with one or more retroreflectors and re-designated to deal with new threats.

In contrast to a cable-linked system, the system of the invention is flexible, and responsive to an anti-ship missile attack on multiple axes.

Because the aerial propulsion unit is controllable, the position of said unit (and hence, the position of the decoy system and passive retroreflector(s)) can be influenced after launch as well as at launch. Exemplar ways of controlling the aerial propulsion unit are to provide a remotely controlled system, or to provide an autonomous or semi-autonomous system with a pre-programed mission. For optional remote control of the aerial propulsion unit, any suitable wireless communication technique may be used.

The system of the invention is typically powered by the power system of the aerial propulsion unit. Alternatively, the system of the invention may comprise a separate on-board power supply unit. Either way, the system of the invention is not powered by a connection to a remote object, for example by a hard-wired connection to a surface ship.

The system of the invention may be used to achieve any or all of the following: to launch one or more retroreflectors to be used as decoys; to position one or more decoy retroreflectors at an initial position determined from tracking information; to correct or finely tune the position of the retroreflector(s) based on revised tracking information, environmental conditions and so on; to maintain one or more decoy retroreflectors at a required location; to change the position of the retroreflector(s) in response to a change in threat conditions; and/or to deploy the decoy retroreflector(s). Deployment of the one or more retroreflectors, for example into the path of a radar seeker or the like, may be in conjunction with any of the aforementioned uses.

Deploying the one or more retroreflectors typically involves separating the retroreflector(s) from the propulsion unit, and optionally causing the one or more retroreflectors to transform from an un-deployed to a deployed configuration, for example from a folded to an unfolded configuration. Upon separation, any links between the aerial propulsion unit and the retroreflector(s) may be severed. Alternatively, the propulsion unit and retroreflector(s) may remain linked in some way until complete severance is required.

The system comprises a release means for separating the one or more retroreflectors from the propulsion unit upon deployment. Any suitable release means may be used, although the means chosen will usually depend on way in which the reflectors are mounted on, contained within or otherwise borne by the controllable propulsion unit. For example, a detachable mounting may be used, or claw grabbers, or doors opening from a compartment internal or external to the propulsion unit. The release means may be actuated in any suitable way, for example by explosive, mechanical or electromechanical means.

The release means may be used to dispense with the one or more corner reflectors after the optional tethered use described below.

The system may comprise a tether configured to link the one or more retroreflectors to the propulsion unit after deployment therefrom. In this way, the aerial propulsion unit may remain linked to the retroreflector(s) after deployment, and may be used to control the position of the one or more retroreflectors even after deployment. The tether may itself be detachable from the aerial propulsion unit and/or the retroreflector(s), so that the linkage can be severed when required.

The tether may comprise any suitable material, for example a polymeric material, natural fibre material or metallic material. The tether may take any suitable form, for example a rope, cable, or chain link system. Usefully, the tether has a length in the range 1 to 25 m.

The one or more retroreflectors may comprise a parachute, preferably, but not necessarily, for controlled descent after complete severance from the propulsion unit and/or optional tether.

The one or more retroreflectors are mounted on, contained within or otherwise borne by the controllable propulsion unit, more specifically mounted on, contained within or otherwise borne by the controllable propulsion unit in a releasable manner. Ideally, the retroreflectors are borne by the propulsion unit in a manner which maintains aerial stability during launch, flight and/or deployment. Preferably, the retroreflector(s) are either mounted underneath the controllable propulsion unit, or held within the unit.

The system is configured such that the one or more retroreflectors can be deployed at a desired location and/or time. The system may be programmed with a predetermined deployment time and/or location, or deployment may be in response to a remote signal, or both. In one mode of use, the passive decoy system is flown to a required location by means of the aerial propulsion unit and remains in that location awaiting subsequent information on where, when and/or in what manner to deploy the retroreflector payload.

The controllable propulsion unit may comprise GPS, or any other suitable guidance and positioning system. Preferably, the propulsion unit is of a size and/or capacity designed to carry a payload of up to 50 kg, more preferably up to 25 kg. The propulsion unit may be foldable.

The controllable aerial propulsion unit is an unmanned aerial or unmanned aerial-aquatic platform, more preferably an unmanned aerial platform. By unmanned aerial or aerial-aquatic platform is meant any vehicle, aircraft, device, system etc which is capable of unmanned flight or unmanned flight in combination with unmanned aquatic operation. The unmanned aerial or aerial-aquatic platform may be autonomous, semi-autonomous or remotely controlled (for example by a human operator). Such unmanned aerial or aerial-aquatic platforms are commonly known as "drones" or "UAVs", and includes quadcopters and the like.

A suitable unmanned aerial platform may take the form of a fixed wing aircraft or a rotorcraft. The aerial platform may be an HTOL, VTOL or launched platform. Preferably, the unmanned aerial platform may be of the type commonly known as a micro-unmanned aerial vehicle (micro-UAV). The unmanned aerial or aerial-aquatic vehicle is preferably a vehicle designed to carry a payload up to 50 kg, more preferably up to 25 kg.

Alternatively, the aerial propulsion unit may comprise directional attitude rockets, which may be pulsed in use to provide propulsion and maintain stability and endurance. Care needs to be taken if directional attitude rockets are used in conjunction with flammable lightweight materials, for example where the retroreflector(s) comprise an optional parachute and/or where the one or more retroreflectors are lightweight and/or expandable retroreflectors comprising flammable materials. In such embodiments, the rockets are preferably angled away from the parachute and/or ACR. Preferably, burn resistant materials are used.

The one or more retroreflectors are preferably lightweight retroreflectors. By lightweight is meant typically having a mass up to about 50 kg, more usually up to about 25 kg. Such lightweight retroreflectors may be expandable, as discussed below. Heavier, often solid, retroreflectors are disadvantageous because a larger propulsion unit may be needed and, moreover, because the larger mass slows down decoy positioning and deployment. Heavier retroreflectors may also drain system power and reduce aerial duration.

The one or more retroreflectors may be configured to transform from a collapsed state to an expanded state upon deployment, for example configured to transform from a folded state to an unfolded state, or from an uninflated state to an inflated state. Expandable corner reflectors are known in the art, for example from US 9,147,940. Typically, the retroreflector(s) are non-functional as a decoy in the collapsed state, but functional in the expanded state.

An advantage of the invention is the versatile way in which it can be used. Several possible use scenarios will now be described, although the scenarios are not intended to be limiting.

In a first possible use scenario, the airborne passive decoy system of the invention is located within a canister as a decoy round, and the decoy round is loaded into a launcher (e.g. a tube launcher) based on a ship or other marine vessel, a land base or other suitable object or platform. Upon detection of a potential threat (e.g. by using long range detection means such as radar), a trajectory is determined for the decoy round and the decoy round is launched. At a fixed time from launch, the airborne passive decoy system is ejected from the decoy round and the controllable aerial propulsion unit is activated, either concurrent with decoy system ejection or subsequent to decoy system ejection. The controllable aerial propulsion unit takes over aerial positioning of the decoy system, which may involve any or all of: remaining in a static position, fine tuning a required aerial position, changing the aerial position, or implementing a controlled descent into the path of a radar seeker. In this way, the system can precisely locate and deploy the one or more retroreflectors into the path of the incoming missile.

In a second possible use scenario, upon detection of a potential threat, the passive decoy system of the invention launches itself from a ship or other marine vessel, land base or other suitable object or platform, by means of the controllable aerial propulsion unit. The aerial propulsion unit can be controlled to undertake both coarse (initial) and then fine positioning of the airborne passive decoy system, in response to information received from (for example) a long range detection means such as radar and a ship's countermeasure control system. As in the previous use scenario, the controllable aerial propulsion unit controls aerial positioning of the decoy system, which may involve any or all of: flying to an initial location, remaining in a static aerial position, fine tuning a required aerial position, changing the aerial position, or implementing a controlled descent into the path of a radar seeker. This allows the system to precisely locate and deploy the one or more retroreflectors into the path of the incoming threat.

In a third possible use scenario, the airborne passive decoy system is dropped or otherwise released from an air vehicle, for example an aircraft, a rotorcraft or a drone. After the system has been dropped or otherwise released, the controllable aerial propulsion unit activates and - in the same way as the above use scenarios - positions the decoy system and deploys the retroreflector(s) as required.

In any or all of the above use scenarios, a plurality of airborne passive decoy systems according to the invention may be deployed in conjunction with each other to create a spatially positioned array of retroreflector decoys which mimic an object, for example which mimic a surface ship. (By mimic is meant mimic the radio frequency and other signature properties of the object.) This may provide an even more effective decoy to defeat anti-ship missile threats. When using multiple airborne passive decoy systems in conjunction with one another, they can be spatially positioned across an area of sea that is typical of a ship to be defended. Deploying their respective one or more corner reflectors whilst in this pattern may create a decoy array that has the depth of a real target ship when it is scanned by the radar in the seeker of the threat missile. Other physical aspects which may cause a threat missile to be spoofed, such as angle glint, may also be created. This offers the possibility of creating a convincing alternative target to a missile because real targets have multiple scattering centres.

In all use scenarios, the one or more retroreflectors are deployed from the decoy system at a required position and/or time. The retroreflector(s) may be severably released from the aerial propulsion unit, in which case the retroreflector(s) optionally comprise one or more parachutes for a controlled descent, or the retroreflectors may remain linked to the propulsion unit, for example by a tether. In the latter case, the aerial propulsion unit may continue to provide lift and hence, can be used to position or reposition the retroreflector(s) even after deployment, and/or to provide controlled descent through the seeker beam.

Advantageously, in embodiments wherein the one or more retroreflectors have been deployed and severably released from the controllable aerial propulsion unit, the aerial propulsion unit may be recovered for service, storage and/or reuse. This improves the cost effectiveness of using a controllable aerial propulsion unit in an airborne passive decoy system, compared with prior art systems.

In a second aspect, the invention provides an airborne passive decoy round for use in the radio waveband, wherein the decoy round comprises a passive decoy system according to the first aspect held within a casing and wherein the decoy round is configured to eject the decoy system from the casing at a predetermined time and/or location after launch.

The casing may be any suitable casing, formed from any suitable material. Launched airborne decoy rounds, for example tube launched decoy rounds, and suitable casings, canisters and ejection means are known in the art.

As discussed above in relation to the first aspect, a decoy round can be fired, launched or propelled to an initial location determined by a combat management system upon detection of a threat. At a fixed time from launch, the airborne passive decoy system is ejected from the decoy round and the controllable aerial propulsion unit is activated, either concurrent with decoy system ejection or subsequent to decoy system ejection. The controllable aerial propulsion unit takes over aerial positioning of the decoy system which may involve any or all of: remaining in a static position, fine tuning a required aerial position, changing the aerial position, or implementing a controlled descent into the path of a radar seeker. In this way, the system can precisely locate and deploy the one or more retroreflectors into the path of the incoming missile.

Preferably, the aerial propulsion unit is foldable or otherwise collapsible. The aerial propulsion unit may be in a folded or otherwise collapsed state when the aerial passive decoy system is held within the casing, and be configured to unfold or otherwise expand upon ejection therefrom.

Preferably, the one or more retroreflectors are configured to transform from a collapsed state to an expanded state upon deployment, for example configured to transform from a folded state to an unfolded state, or from an uninflated state to an inflated state. Typically, the retroreflector(s) are non-functional as a decoy in the collapsed state, but functional in the expanded state. Typically, the retroreflector(s) are configured to expand upon deployment from the decoy system.

Most preferably, both the aerial propulsion unit and the one or more retroreflectors are configured to transform from a collapsed state to an expanded state when ejected and/or deployed. This means that both components are able to fit into the decoy round and transform to a functional form after launch, ejection and/or subsequent deployment.

In a third aspect, the invention provides a passive decoy launching system comprising a launcher and a decoy round according to the second aspect.

Preferably, the airborne passive decoy system of the first aspect or the launching system of the third aspect is provided on a maritime platform, preferably a naval vessel.

The launcher may take any suitable form or configuration, for example a tube launcher. Tube launchers are well-known in military applications.

According to a fourth aspect of the invention, there is provided a method of deploying an airborne passive decoy for use in the radio waveband, said method comprising the steps of:
(i) providing an airborne passive decoy system according to the first aspect;
(ii) identifying an incoming threat using a long-range detection system and determining a remote decoy location;
(iii) using the controllable aerial propulsion unit to position the decoy system at or near the remote decoy location, and
(iv) deploying the one or more retroreflectors.

According to a fifth aspect of the invention, there is provided a method of deploying a passive decoy for use in the radio waveband, said method comprising the steps of:
(i) providing a launching system according to the second aspect;
(ii) identifying an incoming threat using a long-range detection system and determining a remote decoy location and trajectory;
(iii) launching the decoy round and ejecting the decoy system at or near the remote location; and
(iv) deploying the one or more retroreflectors.

Preferably, the aerial propulsion unit provides lift to the one or more retroreflectors at step (iv) of the fifth aspect.

In the methods of the fourth and fifth aspects, the remote location may be revised or updated at or after step (ii) or step (iii) and the aerial propulsion unit may reposition the decoy system based on the revised or updated information. The new location information may be communicated to the airborne passive decoy system by any suitable wireless communications technology.

In both methods, the deployment step (iv) may involve releasing the one or more retroreflectors from the aerial propulsion unit. The one or more retroreflectors may remain linked to the aerial propulsion unit after deployment by means of a tether.

In both methods, the method may involve providing a plurality of airborne passive decoy systems and/or launching systems and deploying the one or more retroreflectors of each airborne passive decoy system and/or associated airborne passive decoy system in conjunction with each other to create a spatially positioned array of retroreflectors, preferably a spatially positioned array which mimics an object. The object may be a naval vessel such as a surface ship.

The use of a plurality of airborne passive decoys systems in this way is described above in relation to the first aspect. The teaching applies *mutatis mutandis* to a decoy round and/or a launching system.

In a sixth aspect, not according to the invention, there is provided the use of an unmanned aerial vehicle or an unmanned aerial aquatic vehicle as a controllable aerial propulsion unit in an airborne passive decoy system. The airborne passive decoy system is an integral system, meaning that it is self-contained and does not rely on tethers, cables or suchlike ancillary features for power, support and/or positioning.

Preferably, the unmanned aerial vehicle or unmanned aerial aquatic vehicle is adapted to carry a payload up to 50 kg, more preferably up to 25 kg.

According to a final aspect, there is provided the use of a plurality of airborne passive decoy systems according to the first aspect and/or a plurality of airborne passive decoy rounds according to the second aspect and/or a plurality of decoy launching systems according to the third aspect to deploy a spatially positioned array of retroreflectors, preferably a spatially positioned array of retroreflectors which mimic an object. The object may be a maritime vessel.

Any feature in one aspect of the invention may be applied to any other aspects of the invention, in any appropriate combination. In particular system aspects may be applied to method and use aspects and vice versa.

### Brief Description of the Drawings

The invention will now be described, purely by way of example, with reference to the accompanying drawings, in which;
Figure 1 shows a decoy system according to the first aspect in use; and
Figure 2 shows a decoy round according to the second aspect in use.

The drawings are for illustrative purposes only and are not to scale.

### Detailed Description

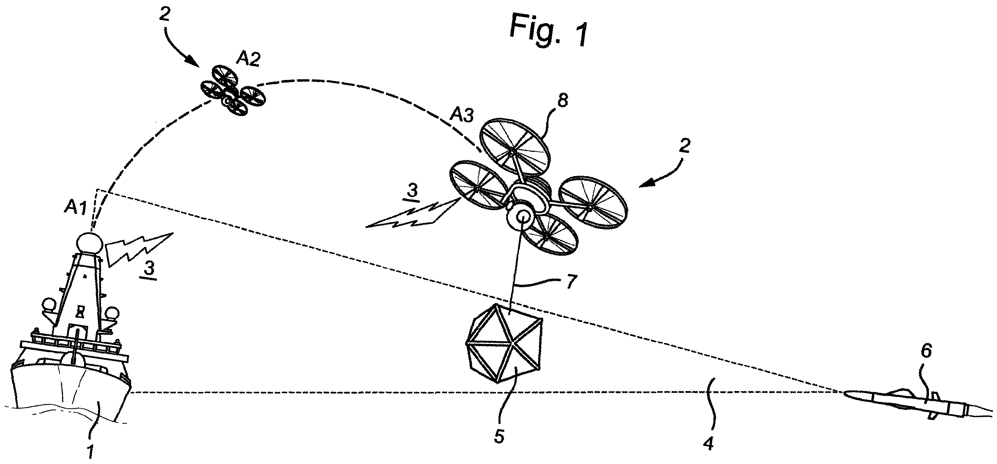

Figure 1 shows an airborne passive decoy system according to the first aspect of the invention in use.

A naval vessel **1** requiring protection is subject to an incoming threat missile **6.** The missile has a guiding beam **4** incident on the vessel. The missile is detected by means of a long range radar tracking system (not shown), and an airborne passive decoy system **2** according to the first aspect of the invention is rapidly launched from vessel **1,** along trajectory **A1-A2-A3,** using the aerial propulsion unit as the launch mechanism. The airborne passive decoy system **2** comprises a quadcopter **8** having a load capacity of about 25 kg and an inflatable corner reflector which is held within (or in an alternative embodiment on) the quadcopter **8.** (The inflatable corner reflector is not visible at point **A2** on Figure 1 because it is held within the quadcopter.) Between points **A2** and **A3** of the trajectory, the corner reflector **5** is deployed by releasing it from the quadcopter **8,** inflated and retained on a tether **7.** Quadcopter **8** controls the aerial position of the passive corner reflector, intercepts guide beam **4** and moves in a direction calculated to drag missile **6** away from the position of naval vessel **1.**

The airborne passive decoy system is remotely controlled using wireless communications network **3.**

After use (that is, after corner reflector **5** has successfully served its decoy function) the tether **7** is released or severed and the corner reflector is dropped into the sea or otherwise disposed of. The quadcopter **8** may also be disposed of, but preferably returns to the naval vessel, serviced if necessary and used as an aerial propulsion system for a new decoy mission.

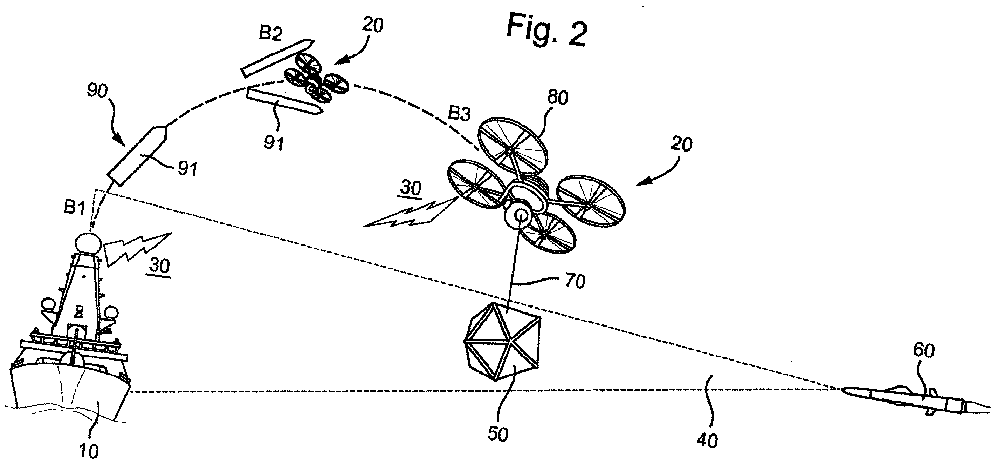

Figure 2 shows an airborne passive decoy round according to the second aspect of the invention in use.

A naval vessel **10** requiring protection is subject to an incoming threat missile **60.** The missile has a guiding beam **40** incident on the vessel. The missile is detected by means of a long range radar tracking system (not shown), and an airborne passive decoy round **90** is launched from vessel **10,** along trajectory **B1-B2-B3,** using a tube launcher. The airborne passive decoy round **90** comprises a casing **91** enclosing an airborne passive decoy system **20,** the decoy system itself comprising a foldable quadcopter **80** having a load capacity of about 25 kg and an inflatable passive corner reflector **50.** The quadcopter and corner reflector are (respectively) folded and uninflated whilst in the casing of the decoy round.

At point **B2** in the trajectory, the airborne passive decoy system is ejected from the airborne passive decoy round. Between points **B2** and **B3** of the trajectory, the passive corner reflector **50** is deployed by releasing it from quadcopter **80,** inflated and retained on a tether **70.** Quadcopter **80** controls the aerial position of the passive corner reflector, intercepts guide beam **40** and moves in a direction calculated to drag missile **60** away from the position of naval vessel **10.**

The airborne passive decoy system is remotely controlled using wireless communications network **30.**

After use (that is, after the passive corner reflector has successfully served its decoy function) the tether is released or severed and the corner reflector is dropped into the sea or otherwise disposed of. The aerial propulsion unit may also be disposed of, but preferably returns to the naval vessel, serviced if necessary and used for a new mission.

It will be understood that the present invention has been described above purely by way of example, and modification of detail can be made within the scope of the invention as defined in the appended claims.

Moreover, the invention has been described with specific reference to maritime vessels, more specifically naval vessels. It will be understood that this is not intended to be limiting and the invention may be used more generally. For example, the invention may be used more generally in the security and military fields, such as in conjunction with land and/or air bases and platforms. Additional applications of the invention will occur to the skilled person.

## Claims

1. An airborne passive decoy system (2, 20) for use in the radio waveband, the system comprising a controllable aerial propulsion unit (8, 80) and one or more retroreflectors (5, 50), wherein the one or more retroreflectors (5, 50) are mounted on, contained within or otherwise borne by the controllable propulsion unit (8, 80), and wherein the system is configured such that the one or more retroreflectors (5, 50) can be deployed as a decoy at a desired location and/or time,
wherein the airborne passive decoy system (2, 20) is an integral system, and wherein the controllable aerial propulsion unit (8, 80) is an unmanned aerial or unmanned aerial-aquatic vehicle configured such that the position of the decoy system (2, 20) can be influenced after launch as well as at launch, and **characterised in that** the system additionally comprises a release means for separating the one or more retroreflectors (5, 50) from the propulsion unit (8, 80) upon deployment.

2. A passive decoy system according to claim 1, wherein the system additionally comprises a tether (7, 70) configured to link the one or more retroreflectors (5, 50) to the propulsion unit (8, 80) after deployment therefrom.

3. A passive decoy system according to claim 1 or claim 2, wherein the one or more retroreflectors (5, 50) comprise a parachute.

4. A passive decoy system according to any preceding claim, wherein the one or more retroreflector(s) (5, 50) are configured to transform from a collapsed state to an expanded state upon deployment.

5. A passive decoy system according to any preceding claim, wherein the one or more retroreflectors are corner reflectors.

6. A passive decoy system according to any preceding claim, wherein the controllable aerial propulsion unit (8, 80) is autonomous or semi-autonomous.

7. A passive decoy system according to any preceding claim, wherein the propulsion unit (8, 80) is foldable.

8. A passive decoy system according to any preceding claim, wherein the one or more retroreflectors (5, 50) comprise multiple reflective faces.

9. An airborne passive decoy round for use in the radio waveband, wherein the decoy round (90) comprises a passive decoy system (2, 20) according to any preceding claim held within a casing (91) and wherein the decoy round (90) is configured to eject the decoy system (2, 20) from the casing (91) at a predetermined time and/or location after launch.

10. A passive decoy launching system comprising a launcher and a decoy round (90) according to claim 9.

11. A method of deploying an airborne passive decoy for use in the radio waveband, said method comprising the steps of:
(i) providing an airborne passive decoy system (2, 20) according to any one of claims 1 to 8;
(ii) identifying an incoming threat (6, 60) using a long-range detection system and determining a remote decoy location;
(iii) using the controllable aerial propulsion unit (8, 80) to position the decoy system (2, 20) at or near the remote decoy location, and
(iv) deploying the one or more retroreflectors (5, 50).

12. A method of deploying a passive decoy for use in the radio waveband, said method comprising the steps of:
(i) providing a launching system according to claim 10;
(ii) identifying an incoming threat (6, 60) using a long-range detection system and determining a remote decoy location and trajectory;
(iii) launching the decoy round (90) and ejecting the decoy system (2, 20) at or near the remote location; and
(iv) deploying the one or more retroreflectors (5, 50).

13. A method according to claim 12, wherein the aerial propulsion unit (8, 80) provides lift to the one or more retroreflectors (5, 50) at step (iv).

14. A method according to any one of claims 11 to 13, wherein the remote location is revised or updated at or after step (ii) or (iii) and wherein the aerial propulsion unit (8, 80) repositions the decoy system (2, 20) based on the revised information.

15. A method according to any one of claims 11 to 14, wherein the deployment step (iv) involves releasing the one or more retroreflectors (5, 50) from the aerial propulsion unit (8, 80).

16. A method according to any one of claims 11 to 15, wherein the one or more retroreflectors (5, 50) remain linked to the aerial propulsion unit (8, 80) after deployment by means of a tether (7, 70).

17. A method according to any one of claims 11 to 16, wherein the airborne passive decoy system (2, 20) provided in claim 11 or the launching system provided in claim 12 is provided on a maritime platform (1, 10).

18. A method according to any one of claims 11 to 17, wherein the method involves providing a plurality of airborne passive decoy systems (2, 20) and/or launching systems and wherein the one or more retroreflectors (5, 50) of each airborne passive decoy system (2, 20) and/or associated airborne passive decoy system are deployed in conjunction with each other to create a spatially positioned array.

19. Use of a plurality of airborne passive decoy systems (2, 20) according to any one of claims 1 to 8 and/or a plurality of airborne passive decoy rounds (90) according to claim 9 and/or a plurality of decoy launching systems according to claim 10 in conjunction with each other to deploy a spatially positioned array of retroreflectors.

20. Use according to claim 19, wherein the spatially positioned array of retroreflectors mimic an object.

## Patentansprüche

1. Passives luftgestütztes Täuschkörpersystem (2, 20) zur Verwendung im Funkwellenband, wobei das System eine steuerbare Flugantriebseinheit (8, 80) und einen oder mehrere Rückstrahler (5, 50) umfasst, wobei die ein oder mehreren Rückstrahler (5, 50) an der steuerbaren Antriebseinheit (8, 80) angebracht, in ihr enthalten oder anderweitig von dieser getragen sind, und wobei das System so konfiguriert ist, dass die ein oder mehreren Rückstrahler (5, 50) an einem gewünschten Ort und/oder zu einem gewünschten Zeitpunkt als Täuschkörper freigesetzt werden können,
wobei das passive luftgestützte Täuschkörpersystem (2, 20) ein integrales System ist und wobei die steuerbare Flugantriebseinheit (8, 80) ein unbemanntes Luft- oder unbemanntes Luft-Wasser-Fahrzeug ist, das so konfiguriert ist, dass die Position des Täuschkörpersystems (2, 20) sowohl nach dem Start als auch beim Start beeinflusst werden kann, **dadurch gekennzeichnet, dass** das System zusätzlich eine Aussetzvorrichtung umfasst, um die ein oder mehreren Rückstrahler (5, 50) bei der Freisetzung von der Antriebseinheit (8, 80) zu trennen.

2. Passives Täuschkörpersystem nach Anspruch 1, wobei das System zusätzlich eine Leine (7, 70) umfasst, die konfiguriert ist, um die ein oder mehreren Rückstrahler (5, 50) nach der Freisetzung von der Antriebseinheit (8, 80) mit dieser zu verbinden.

3. Passives Täuschkörpersystem nach Anspruch 1 oder Anspruch 2, bei dem die ein oder mehreren Rückstrahler (5, 50) einen Fallschirm umfassen.

4. Passives Täuschkörpersystem nach einem der vorstehenden Ansprüche, bei dem die ein oder mehreren Rückstrahler (5, 50) konfiguriert sind, um bei Freisetzung von einem zusammengelegten Zustand in einen expandierten Zustand überzugehen.

5. Passives Täuschkörpersystem nach einem der vorstehenden Ansprüche, bei dem die ein oder mehreren Rückstrahler Eckreflektoren sind.

6. Passives Täuschkörpersystem nach einem der vorstehenden Ansprüche, bei dem die steuerbare Flugantriebseinheit (8, 80) autonom oder halbautonom ist.

7. Passives Täuschkörpersystem nach einem der vorstehenden Ansprüche, bei dem die Antriebseinheit (8, 80) klappbar ist.

8. Passives Täuschkörpersystem nach einem der vorstehenden Ansprüche, bei dem die ein oder mehreren Rückstrahler (5, 50) mehrere reflektierende Flächen umfassen.

9. Passives Täuschkörpergeschoss für den Einsatz im Funkwellenbereich, wobei das Täuschkörpergeschoss (90) ein passives Täuschkörpersystem (2, 20) gemäß einem der vorstehenden Ansprüche umfasst, das in einem Gehäuse (91) untergebracht ist, und wobei das Täuschkörpergeschoss (90) konfiguriert ist, um das Täuschkörpersystem (2, 20) nach dem Abschuss zu einem vorgegebenen Zeitpunkt und/oder an einem vorgegebenen Ort aus dem Gehäuse (91) auszuwerfen.

10. Abschusssystem für ein passives Täuschgeschoss, das einen Werfer und ein Täuschkörpergeschoss (90) nach Anspruch 9 umfasst.

11. Verfahren zum Freisetzen eines passiven Täuschkörpergeschosses für den Einsatz im Funkwellenbereich, wobei das Verfahren die folgenden Schritte umfasst:
(i) Bereitstellen eines luftgestützten passiven Täuschkörpersystems (2, 20) nach einem der Ansprüche 1 bis 8;
(ii) Identifizieren einer ankommenden Bedrohung (6, 60) unter Verwendung eines Fernerkennungssystems und Bestimmen eines entfernten Täuschkörperortes;
(iii) Verwenden der steuerbaren Luftantriebseinheit (8, 80), um das Täuschkörpersystem (2, 20) an oder in der Nähe des entfernten Täuschkörperortes zu positionieren, und
(iv) Freisetzen der ein oder der mehreren Rückstrahler (5, 50).

12. Verfahren zum Freisetzen eines passiven Täuschkörpers zur Verwendung im Funkwellenbereich, wobei das Verfahren die folgenden Schritte umfasst:
(i) Bereitstellen eines Abschusssystems nach Anspruch 10;
(ii) Identifizieren einer ankommenden Bedrohung (6, 60) unter Verwendung eines Fernerkennungssystems und Bestimmen eines entfernten Täuschkörperortes und einer Flugbahn;
(iii) Abschießen des Täuschkörpergeschosses (90) und Freisetzen des Täuschkörpersystems (2, 20) an oder in der Nähe des entfernten Ortes; und
(iv) Freisetzen der ein oder mehreren Rückstrahler (5, 50).

13. Verfahren nach Anspruch 12, bei dem die Luftantriebseinheit (8, 80) in Schritt (iv) die ein oder mehreren Rückstrahler (5, 50) mit Auftrieb versorgt.

14. Verfahren nach einem der Ansprüche 11 bis 13, bei dem der entfernte Ort in oder nach Schritt (ii) oder (iii) überarbeitet oder aktualisiert wird und bei dem die Flugantriebseinheit (8, 80) das Täuschkörpersystem (2, 20) auf der Grundlage der überarbeiteten Informationen neu positioniert.

15. Verfahren nach einem der Ansprüche 11 bis 14, bei dem der Freisetzungsschritt (iv) das Aussetzen der ein oder mehreren Rückstrahler (5, 50) aus der Flugantriebseinheit (8, 80) umfasst.

16. Verfahren nach einem der Ansprüche 11 bis 15, bei dem die ein oder mehreren Rückstrahler (5, 50) nach der Freisetzung durch eine Leine (7, 70) mit der Flugantriebseinheit (8, 80) verbunden bleiben.

17. Verfahren nach einem der Ansprüche 11 bis 16, bei dem das in Anspruch 11 vorgesehene luftgestützte passive Täuschkörpersystem (2, 20) oder das in Anspruch 12 vorgesehene Abschusssystem auf einer seegestützten Plattform (1, 10) vorgesehen ist.

18. Verfahren nach einem der Ansprüche 11 bis 17, wobei das Verfahren die Bereitstellung einer Mehrzahl von luftgestützten passiven Täuschkörpersystemen (2, 20) und/oder Abschusssystemen umfasst und wobei die ein oder mehreren Rückstrahler (5, 50) jedes luftgestützten passiven Täuschkörpersystems (2, 20) und/oder zugehörigen luftgestützten passiven Täuschkörpersystems in Verbindung miteinander eingesetzt werden, um eine im Raum positionierte Anordnung zu schaffen.

19. Verwendung einer Mehrzahl von luftgestützten passiven Täuschkörpersystemen (2, 20) nach einem der Ansprüche 1 bis 8 und/oder einer Mehrzahl von luftgestützten passiven Täuschkörpergeschossen (90) nach Anspruch 9 und/oder einer Mehrzahl von Täuschkörper-Abschusssystemen nach Anspruch 10 in Verbindung miteinander, um eine räumlich positionierte Anordnung von Rückstrahlern freizusetzen.

20. Verwendung gemäß Anspruch 19, bei der die räumlich angeordnete Anordnung von Rückstrahlern ein Objekt nachbildet.

## Revendications

1. Système de leurre passif aéroporté (2, 20) pour utilisation dans la bande des ondes radio, le système comprenant une unité de propulsion aérienne contrôlable (8, 80) et un ou plusieurs rétroréflecteurs (5, 50), dans lequel le ou les rétroréflecteurs (5, 50) sont montés sur, contenus dans ou autrement supportés par l'unité de propulsion contrôlable (8, 80), et dans lequel le système est configuré de telle sorte que le ou les rétroréflecteurs (5, 50) peuvent être déployés comme un leurre à un endroit et/ou à un moment souhaités,
dans lequel le système de leurre passif aéroporté (2, 20) est un système intégré, et dans lequel l'unité de propulsion aérienne contrôlable (8, 80) est un véhicule aérien sans pilote ou aérien-aquatique sans pilote configuré de telle sorte que la position du système de leurre (2, 20) peut être influencée après le lancement ainsi qu'au moment du lancement,
et **caractérisé en ce que** le système comprend en outre un moyen de libération pour séparer le ou les rétroréflecteurs (5, 50) de l'unité de propulsion (8, 80) lors du déploiement.

2. Système de leurre passif selon la revendication 1, dans lequel le système comprend en outre une attache (7, 70) configurée pour relier le ou les rétroréflecteurs (5, 50) à l'unité de propulsion (8, 80) après leur déploiement à partir de celle-ci.

3. Système de leurre passif selon la revendication 1 ou la revendication 2, dans lequel le ou les rétroréflecteurs (5, 50) comprennent un parachute.

4. Système de leurre passif selon l'une quelconque des revendications précédentes, dans lequel le ou les rétroréflecteurs (5, 50) sont configurés pour passer d'un état comprimé à un état déployé lors du déploiement.

5. Système de leurre passif selon l'une quelconque des revendications précédentes, dans lequel le ou les rétroréflecteurs sont des réflecteurs angulaires.

6. Système de leurre passif selon l'une quelconque des revendications précédentes, dans lequel l'unité de propulsion aérienne contrôlable (8, 80) est autonome ou semi-autonome.

7. Système de leurre passif selon l'une quelconque des revendications précédentes, dans lequel l'unité de propulsion (8, 80) est pliable.

8. Système de leurre passif selon l'une quelconque des revendications précédentes, dans lequel le ou les rétroréflecteurs (5, 50) comprennent plusieurs faces réfléchissantes.

9. Leurre passif aéroporté pour utilisation dans la bande des ondes radio, dans lequel le leurre (90) comprend un système de leurre passif (2, 20) selon l'une quelconque des revendications précédentes, contenu dans un boîtier (91), et dans lequel le leurre (90) est configuré pour éjecter le système de leurre (2, 20) hors du boîtier à un moment et/ou à un endroit prédéterminés après le lancement.

10. Système de lancement de leurre passif comprenant un lanceur et un leurre (90) selon la revendication 9.

11. Procédé de déploiement d'un leurre passif aéroporté pour utilisation dans la bande des ondes radio, ledit procédé comprenant les étapes suivantes :
(i) fournir un système de leurre passif aéroporté (2, 20) selon l'une quelconque des revendications 1 à 8 ;
(ii) identifier une menace entrante (6, 60) à l'aide d'un système de détection à longue portée et déterminer un emplacement de leurre distant ;
(iii) utiliser l'unité de propulsion aérienne contrôlable (8, 80) pour positionner le système de leurre (2, 20) à l'emplacement du leurre distant ou à proximité de celui-ci, et
(iv) déployer le ou les rétroréflecteurs (5, 50).

12. Procédé de déploiement d'un leurre passif pour utilisation dans la bande des ondes radio, ledit procédé comprenant les étapes suivantes :
(i) fournir un système de lancement selon la revendication 10 ;
(ii) identifier une menace entrante (6, 60) à l'aide d'un système de détection à longue portée et déterminer un emplacement et une trajectoire de leurre distants ;
(iii) lancer le leurre (90) et éjecter le système de leurre (2, 20) à l'emplacement distant ou à proximité de celui-ci ; et
(iv) déployer le ou les rétroréflecteurs (5, 50).

13. Procédé selon la revendication 12, dans lequel l'unité de propulsion aérienne (8, 80) fournit une portance au ou aux rétroréflecteurs (5, 50) à l'étape (iv).

14. Procédé selon l'une quelconque des revendications 11 à 13, dans lequel l'emplacement distant est révisé ou mis à jour à l'étape (ii) ou (iii) ou après celle-ci, et dans lequel l'unité de propulsion aérienne (8, 80) repositionne le système de leurre (2, 20) sur la base des informations révisées

15. Procédé selon l'une quelconque des revendications 11 à 14, dans lequel l'étape de déploiement (iv) implique la libération du ou des rétroréflecteurs (5, 50) de l'unité de propulsion aérienne (8, 80).

16. Procédé selon l'une quelconque des revendications 11 à 15, dans lequel le ou les rétroréflecteurs (5, 50) restent reliés à l'unité de propulsion aérienne (8, 80) après leur déploiement au moyen d'une attache (7, 70).

17. Procédé selon l'une quelconque des revendications 11 à 16, dans lequel le système de leurre passif aéroporté (2, 20) de la revendication 11 ou le système de lancement de la revendication 12 est fourni sur une plate-forme maritime (1, 10).

18. Procédé selon l'une quelconque des revendications 11 à 17, dans lequel le procédé implique la fourniture d'une pluralité de systèmes de leurres passifs aéroportés (2, 20) et/ou de systèmes de lancement, et dans lequel le ou les rétroréflecteurs (5, 50) de chaque système de leurre passif aéroporté (2, 20) et/ou système de leurre passif aéroporté associé sont déployés conjointement les uns avec les autres pour créer un réseau positionné dans l'espace.

19. Utilisation d'une pluralité de systèmes de leurres passifs aéroportés (2, 20) selon l'une quelconque des revendications 1 à 8 et/ou d'une pluralité de leurres passifs aéroportées (90) selon la revendication 9 et/ou d'une pluralité de systèmes de lancement de leurres selon la revendication 10 conjointement les uns avec les autres pour déployer un réseau de rétroréflecteurs positionné dans l'espace.

20. Utilisation selon la revendication 19, dans laquelle le réseau de rétroréflecteurs positionné dans l'espace imite un objet.
